# EUROPEAN PATENT SPECIFICATION

(11) **EP 2 693 546 B1**
(45) Date of publication and mention of the grant of the patent: **19.12.2018**
(21) Application number: 12764336.9
(22) Date of filing: 23.02.2012
(51) Int. Cl.: H01M 8/2483, H01M 8/242, H01M 8/241, H01M 8/04089, H01M 8/0276, H01M 8/0273, H01M 8/0271, H01M 8/0267, H01M 8/023, H01M 8/1018

(54) **FUEL CELL**
BRENNSTOFFZELLE
PILE À COMBUSTIBLE

(30) Priority: 31.03.2011 JP 2011078360
(43) Date of publication of application: 05.02.2014
(73) Proprietor: NISSAN MOTOR CO., LTD., Yokohama-shi, Kanagawa 221-0023 (JP)
(72) Inventor: OKU, Takanori, Kanagawa 243-0123 (JP); KAGEYAMA, Kazuhiro, Kanagawa 243-0123 (JP); ABE, Mitsutaka, Kanagawa 243-0123 (JP)
(74) Representative: Grünecker Patent- und Rechtsanwälte PartG mbB
(86) International application number: PCT/JP2012/054386
(87) International publication number: WO 2012/132667

(56) References cited:
- EP-A2- 1 458 040
- JP-A- 2002 231 264
- JP-A- 2002 237 317
- JP-A- 2005 158 424
- JP-A- 2005 158 424
- JP-A- 2005 166 508
- JP-A- 2005 166 508
- JP-A- 2007 328 969
- JP-A- 2008 034 383
- JP-A- 2008 097 899
- US-A1- 2002 117 780
- US-A1- 2003 003 342
- US-A1- 2009 004 539

## Description

### TECHNICAL FIELD

The present invention relates to a fuel battery cell (single cell) used as a power generation element for a fuel battery, and particularly relates to a fuel battery cell for forming a fuel battery stack in which multiple fuel battery cells are stacked on one another.

### BACKGROUND ART

A fuel battery cell of this type is described in Patent Literature 1, for example. The fuel battery cell described in Patent Literature 1 includes a membrane electrode assembly (MEA) and two separators holding the membrane electrode assembly therebetween. In the membrane electrode assembly, an electrolyte membrane is held between a fuel electrode and an air electrode. Both sides of the membrane electrode assembly are each provided with first and second gas diffusion layers.

The above fuel battery cell is configured to prevent deformation of the membrane electrode assembly or slipping of the gas diffusion layer in such a way that both end portions of the membrane electrode assembly are extended outward beyond the gas diffusion layer and are each held between elastic gaskets provided to both the separators outside the gas diffusion layer. In the fuel battery cell of Patent Literature 1, the gas diffusion layers, the gaskets and the separators are stacked and arranged to be symmetrical to each other with respect to the membrane electrode assembly. JP2005158424 discloses a fuel battery with frame-shaped seal members.

### CITATION LIST

### PATENT LITERATURE

Patent Literature 1: Japanese Patent Unexamined Publication No. 2010-108852

### SUMMARY OF INVENTION

In a fuel battery cell as described above, since a cathode gas and an anode gas as reaction gases need to be supplied to the gas diffusion layers on the membrane electrode assembly, a flow-passage region (diffusion area) for a reaction gas is indispensable between each of the gas diffusion layers and the corresponding gasket.

In the fuel battery cell of this type, however, a gas pressure difference between the cathode side and the anode side occurs in some cases depending on the operational conditions of the fuel battery, and therefore the flow-passage regions for the reaction gases are susceptible to the influence of the pressure difference. In this connection, in a structure in which each end portion of the membrane electrode assembly is held between gaskets stacked and arranged symmetrical to each other as in a conventional fuel battery cell, the end portion of the membrane electrode assembly is deformed in a thickness direction due to the pressure difference. Under such deformation, a bending stress is concentrated at the border of the portion held between the gaskets. Hence, there is a problem that it is difficult to enhance the durability (fatigue life) of the membrane electrode assembly.

The present invention has been made in the foregoing circumstances, and has an objective to provide a fuel battery cell including a membrane electrode assembly having a frame in its periphery, and two separators holding the frame and the membrane electrode assembly therebetween, the fuel battery cell achieving enhancement in the durability of the frame and the membrane electrode assembly against a gas pressure difference between the cathode side and the anode side.

A fuel battery cell of the present invention includes a membrane electrode assembly having a frame in a periphery thereof, and two separators holding the frame and the membrane electrode assembly therebetween, and has a structure in which a diffuser area allowing a reaction gas to flow therethrough is formed between the frame and each of the separators, and a gas seal member is provided to a peripheral portion of each of the diffuser areas.

In addition, in the structure of the fuel battery cell, a diffuser-area-side edge position of the gas seal member in the diffuser area on a cathode side and a diffuser-area-side edge position of the gas seal member in the diffuser area on an anode side are offset from each other in an inside-outside direction of the diffuser areas. Having the above structure, the fuel battery cell is provided as means for solving the existing problems.

According to the fuel battery cell of the present invention, a fuel battery cell including a membrane electrode assembly having a frame in its periphery, and two separators holding the frame and the membrane electrode assembly therebetween achieves enhancement of the durability (fatigue life) of the frame and the membrane electrode assembly against the gas pressure difference between the cathode side and the anode side.

### BRIEF DESCRIPTION OF DRAWINGS

Fig. 1 is an exploded plan view for explaining an embodiment of a fuel battery cell of the present invention.
Fig. 2 is a plan view of the fuel battery cell illustrated in Fig. 1 after assembling.
Part (A) of Fig. 3 is an exploded perspective view for explaining a fuel battery stack formed by stacking the fuel battery cells illustrated in Fig. 1 and part (B) of Fig. 3 is a perspective view after assembling.
Fig. 4 is a plan view for explaining a gas seal member provided to a peripheral portion of a diffuser area on an anode side.
Fig. 5 is a cross sectional view of the diffuser area of the fuel battery cell illustrated in Fig. 4.
Fig. 6 is a cross sectional view of the diffuser area illustrating another embodiment of a fuel battery cell.
Fig. 7 is a cross sectional view of the diffuser area illustrating still another embodiment of a fuel battery cell.
Fig. 8 is an explanatory diagram illustrating an example of a fuel battery system including a fuel battery stack.
Fig. 9 is a graph showing gas pressure changes on the cathode side and the anode side in the fuel battery system illustrated in Fig. 8.

### DESCRIPTION OF EMBODIMENTS

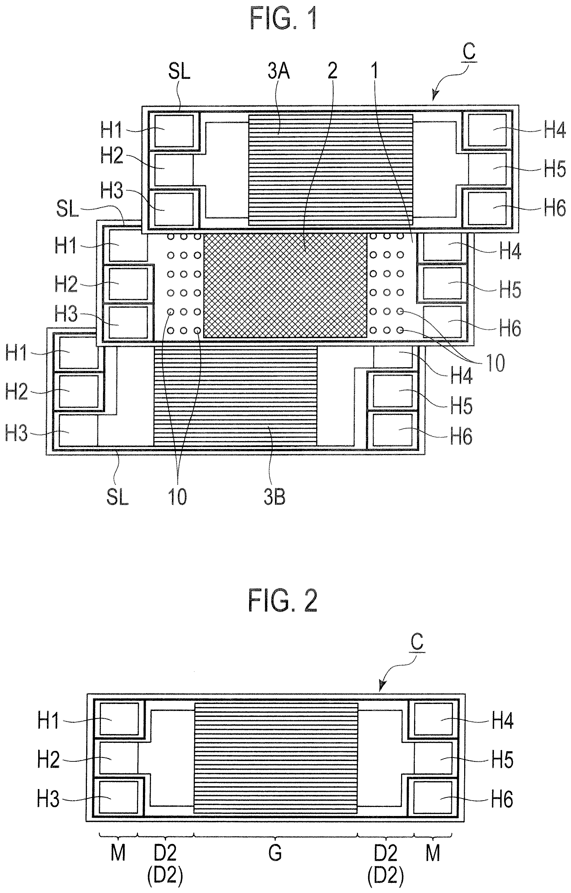

Figs. 1 and 2 are views for explaining an embodiment of a fuel battery cell of the present invention.

A fuel battery cell C illustrated in Fig. 1 includes a membrane electrode assembly 2 having a frame 1 in its periphery and cathode-side and anode-side separators 3A, 3B holding the frame 1 and the membrane electrode assembly 2 therebetween. The frame 1 is in a thin plate form having a substantially constant thickness, and most part of the frame 1 other than its marginal portion has a thickness smaller than the membrane electrode assembly 2. In addition, the fuel battery cell C includes a flow-passage region (diffuser area to be described later) between the frame 1 and each of the separators 3A, 3B, the flow-passage region being for a reaction gas to flow therethrough. Here, it is desirable that the frame 1 be made of a resin and the separators 3A, 3B be made of a metal for the sake of manufacturing convenience.

The membrane electrode assembly 2 is generally called MEA, and has a structure in which an electrolyte layer made of a solid polymer, for example, is held between an air electrode layer (cathode) and a fuel electrode layer (anode). This membrane electrode assembly 2 generates power through electrochemical reaction while the fuel electrode layer is being supplied with an anode gas (hydrogen) that is one of reaction gases, whereas the air electrode layer is being supplied with a cathode gas (air) that is the other reaction gas. Note that examples of the membrane electrode assembly 2 include one in which gas diffusion layers made of carbon paper, a porous material or the like are provided to surfaces of the air electrode layer and the fuel electrode layer.

The frame 1 is integrated with the membrane electrode assembly 2 by resin molding (for example, injection molding), and is formed in a rectangular shape with the membrane electrode assembly 2 located in the center thereof in this embodiment. Moreover, the frame 1 is provided with manifold holes H1 to H6 in both end portions thereof, i.e., three manifold holes aligned in each end portion. A region extending from each of the groups of manifold holes to the membrane electrode assembly 2 is a flow-passage region for a reaction gas. All of the frame 1 and the two separators 3A, 3B have rectangular shapes with approximately the same lengthwise and widthwise dimensions.

In addition, the frame 1 is provided with multiple circular protruding portions 10 aligned in the lengthwise and widthwise directions in the flow-passage regions for the reaction gases. These protruding portions 10 maintain flow-passage spaces for the reaction gases by coming into contact with the separators 3A, 3B when a displacement in the thickness direction occurs in the fuel battery cell C due to time-dependent variation or the like of the membrane electrode assembly 2.

Each of the separators 3A, 3B is formed of a metal plate such as a stainless steel plate by press working. Each separator 3A, 3B is formed in such a way that its center area corresponding to the membrane electrode assembly 2 has a corrugated shape in a cross section taken along a short-side direction. Corrugations in this corrugated shape continuously extend in the long-side direction as illustrated in the drawing. Thus, in the center area of each separator 3A, 3B corresponding to the membrane electrode assembly 2, ridge portions in the corrugated shape are in contact with the membrane electrode assembly 2, whereas trough portions in the corrugated shape serve as channels for a reaction gas.

In addition, each separator 3A, 3B includes manifold holes H1 to H6 in both end portions thereof, the manifold holes H1 to H6 being equivalent to the manifold holes H1 to H6 in the frame 1. A region extending from each of the groups of manifold holes to the area having the corrugated cross section is a flow-passage region of a reaction gas.

The foregoing frame 1, membrane electrode assembly 2 and two separators 3A, 3B are stacked on one another to form a fuel battery cell C. In this structure, the fuel battery cell C has a power generation area G, which is a region of the membrane electrode assembly 2, in the center, as particularly illustrated in Fig. 2. In addition, the fuel battery cell C includes manifold areas M for supplying and discharging the reaction gases at both sides of the power generation area G, and a diffuser area D2 (or D1) extending from each of the manifold areas M to the power generation area G and serving as the flow-passage region for the corresponding reaction gas. The diffuser areas D2 (or D1) are formed between the frame 1 and each of the two separators 3A, 3B, i.e., on each of the anode side and the cathode side.

In one of the manifold areas M illustrated on the left side in Fig. 2, the manifold holes H1 to H3 are for cathode gas supply (H1), cooling fluid supply (H2) and anode gas supply (H3), and the manifold holes H1, H2, or H3 communicate with each other in a stacking direction to form a channel. Moreover, in the other manifold area M illustrated on the right side in Fig. 2, the manifold holes H4 to H6 are for anode gas discharge (H4), cooling fluid discharge (H5) and cathode gas discharge (H6), and the manifold holes H4, H5, or H6 communicate with each other in the stacking direction to form a channel. Here, part or all of the manifold holes for supply and the manifold holes for discharge may have reverse positional relationships therebetween.

In addition, as illustrated in Fig. 1, the fuel battery cell C is provided with a gas seal SL between marginal portions of the frame 1 and each of the separators 3A, 3B and around the manifold holes H1 to H6. Moreover, in a state where multiple fuel battery cells C are stacked on one another, a gas seal SL is also provided between cells, more specifically, between the separators 3 adjacent to each other. This embodiment employs a structure in which a cooling fluid flows between the adjacent separators 3, 3.

Each of the foregoing gas seals SL hermetically separates the corresponding one of the flow-passage regions for the cathode gas, the anode gas and the cooling fluid from the others in its interlayer space, and has an opening at an appropriate location around the manifold holes H1 to H6 such that the gas seal SL allows the predetermined fluid to flow into the interlayer space.

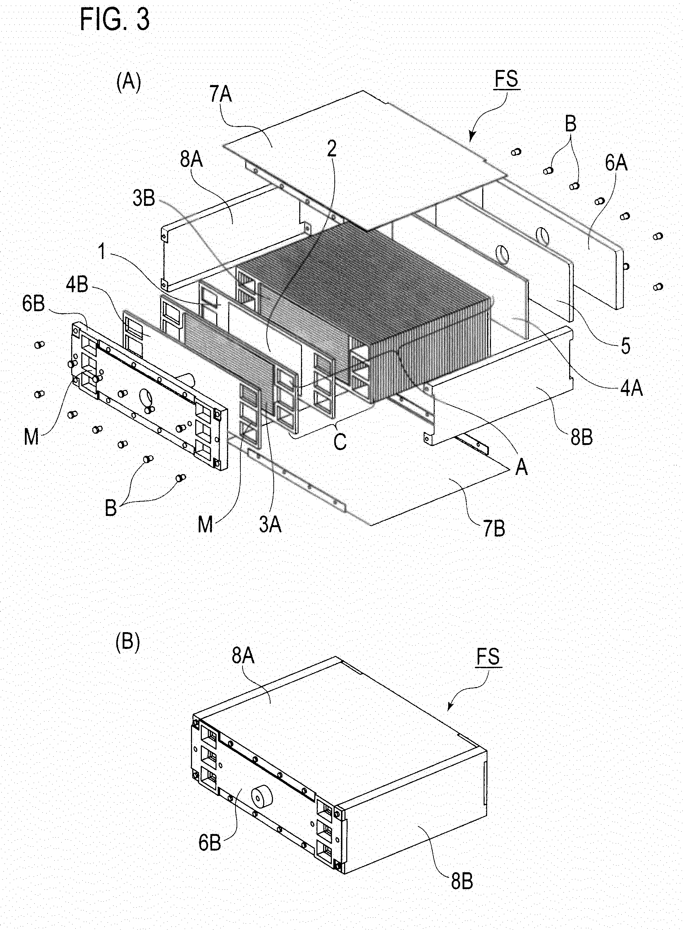

Multiple fuel battery cells C having the foregoing structure are stacked on one another to form a fuel battery stack FS illustrated in Fig. 3.

In the fuel battery stack FS, as illustrated in part (A) of Fig. 3, a stack unit A of the fuel battery cells C is provided with an end plate 6A on one end portion thereof in the cell stacking direction (right end portion in Fig. 3) with a current collector 4A and a spacer 5 interposed in between, and is provided with an end plate 6B on the other end portion thereof with a current collector 4B and an end plate 6B interposed in between. In addition, in the fuel battery stack FS, fastener plates 7A, 7B are provided on both surfaces (upper and lower surfaces in Fig. 3) of the stack unit A, the surfaces formed by the long sides of the fuel battery cells C, and reinforcing plates 8A, 8B are provided on both surfaces of the stack unit A, the surfaces formed by the short sides of the fuel battery cells C.

Moreover, in the fuel battery stack FS, the fastener plates 7A, 7B and the reinforcing plates 8A, 8B are joined to both end plates 6A, 6B with bolts B. In this way, the fuel battery stack FS has a casing integrated structure as illustrated in part (B) of Fig. 3. With this structure, a predetermined contact pressure is applied to each of the fuel battery cells C with the stack unit A bound and pressurized in the cell stacking direction, and thereby the fuel battery stack FS maintains properties such as gas sealing properties and conductivity at favorable levels.

Here, in the fuel battery cells C as described above, a gas pressure difference between the cathode side and the anode side occurs depending on the operational conditions of the fuel battery, and the diffuser areas D1, D2 as the flow-passage regions for the reaction gases are affected by the pressure difference. More specifically, the frame 1 isolating the diffuser areas D1, D2 on the cathode side and the anode side from each other is deformed in the thickness direction due to the pressure difference, and bending stresses are concentrated at the borders of the portions held between the gas seals SL.

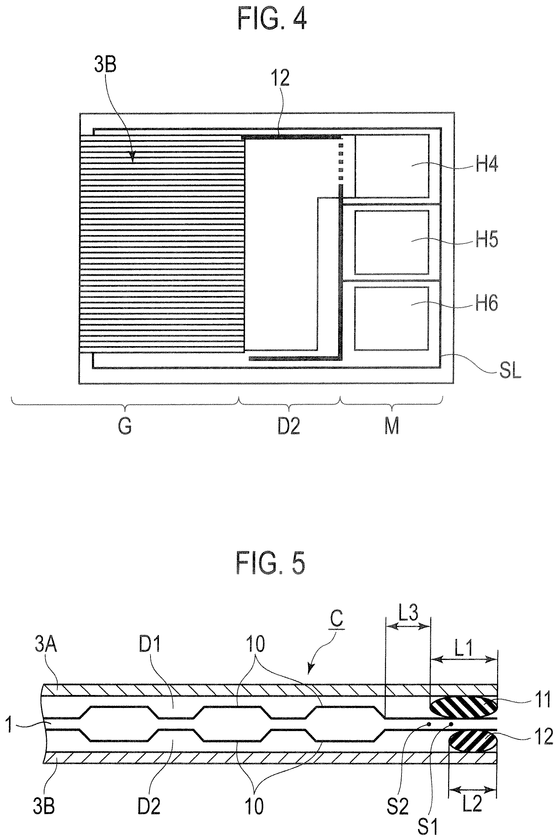

To address this problem, the fuel battery cell C is provided with a structure, as Fig. 4 illustrates the anode side separator 3B, in which a gas seal member 12 (11) depicted by a bold line is provided to a peripheral portion of the diffuser area D2. Then, as illustrated in Fig. 5, in the fuel battery cell C, a diffuser-area-Dl-side edge position of the gas seal member 11 in the diffuser area D1 on the cathode side (upper side in Fig. 5) and a diffuser-area-D2-side edge position of the gas seal member 12 in the diffuser area D2 on the anode side (lower side in Fig. 5) are offset from each other in an inside-outside direction of the diffuser areas D1, D2 (left-right direction in Fig. 5). In short, the two gas seal members 11, 12 are provided asymmetrically with respect to the frame 1 with the diffuser area D1, D2 side edge positions arranged offset from each other.

In this embodiment, a width length L1 of the gas seal member 11 in the diffuser area D1 on the cathode side and a width length L2 of the gas seal member 12 in the diffuser area D2 on the anode side are different from each other. Due to this difference, the diffuser-area-Dl, D2-side edge positions of the gas seal members 11, 12 are offset from each other in the fuel battery cell C.

Specifically, in the illustrated example, the width length L2 of the gas seal member 12 on the anode side is smaller than the width length L1 of the gas seal member 11 on the cathode side. Thus, the diffuser-area-Dl-side edge position of the gas seal member 11 in the diffuser area D1 on the cathode side is offset to an inner side of the diffuser area D1 (to the left in Fig. 5), with respect to the diffuser-area-D2-side edge position of the gas seal member 12 in the diffuser area D2 on the anode side.

The above gas seal members 11, 12 may be formed using parts of the gas seals SL described above, or may be provided as members separated from the gas seals SL. It is more preferable that the gas seal members 11, 12 be made of a material having both adhesiveness and sealing properties. Hence, the gas seal member 11, 12 bonds the frame 1 and each of the separators 3A, 3B together and thereby can maintain air tightness between the two.

The gas seal members 11, 12 as described above can be formed in the same process as the application of the gas seals SL. Moreover, it is also effective to form fine asperities on the surfaces of layout positions for the seals on the frame 1 by processing the layout positions through face abrasion processing such as shot blasting before the formation of the gas seal members 11, 12, and to enhance the adhesiveness of the gas seal members 11, 12 by using the fine asperities thus formed. Here, the gas seal members 11, 12 are provided with openings for ensuring the passages of the gases; specifically, on the anode side illustrated in Fig. 4, for example, an opening at a portion (dotted line portion) corresponding to the manifold hole H4 for anode gas discharge.

In the fuel battery cell C having the foregoing structure, the diffuser-area-Dl-side edge position of the gas seal member 11 on the cathode side and the diffuser-area-D2-side edge position of the gas seal member 12 on the anode side are offset from each other, so that there is a positional difference, in the inside-outside direction of the diffuser areas D1, D2, between a stress-occurring site S1 under the displacement of the frame 1 to the anode side (downward in Fig. 5) due to the gas pressure difference, and a stress-occurring site S2 under the displacement of the frame 1 to the cathode side due to the gas pressure difference.

Thus, in the fuel battery cell C, even if the frame 1 is repeatedly displaced in the thickness direction due to the pressure difference between the anode side and the cathode side, the bending stress is not concentrated at one site as in the conventional case but is distributed to the two stress-occurring sites S1, S2. Consequently, the durability (fatigue life) of the frame 1 and the membrane electrode assembly 2 against the gas pressure difference can be improved.

Additionally, in the foregoing fuel battery cell C, the width length L2 of the gas seal member 12 on the anode side is smaller, and the diffuser-area-Dl-side edge position of the gas seal member 11 on the cathode side is offset to the inner side of the diffuser area D1. Accordingly, a beam length L3 from the gas seal member 11 to the protruding portions 10 on the cathode side is short. With this structure, the fuel battery cell C can keep much lower the bending stress occurring in the frame 1 especially when the frame 1 is displaced toward the cathode side. Thus, the fuel battery cell C can achieve further improvement in the durability.

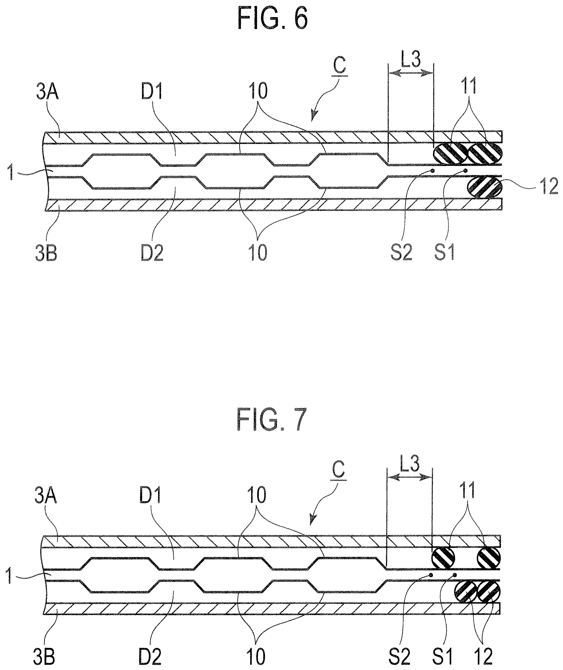

Fig. 6 and 7 are diagrams for explaining other embodiments of fuel battery cells of the present invention. In the following embodiments, the same component elements as those in the foregoing embodiment (see Figs. 1 to 5) are given the same reference numerals and the detailed description thereof is omitted.

In a fuel battery cell C illustrated in Fig. 6, the number of gas seal members 11 in the diffuser area on the cathode side (upper side in Fig. 6) is different from the number of gas seal members 12 in the diffuser area on the anode side. Thus, in the fuel battery cell C, the edge positions of the gas seal members 11, 12 in the diffuser areas D1, D2 on the cathode side and the anode side are offset from each other in the inside-outside direction of the diffuser areas (left-right direction in Fig. 6).

More specifically, in the illustrated example, there are two gas seal members 11 on the cathode side and one gas seal member 12 on the anode side, and the gas seal members 11, 12 individually have approximately the same size. Then, in the structure, the diffuser-area-Dl-side edge position of the gas seal members 11 in the diffuser area D1 on the cathode side is offset to the inner side of the diffuser area D1 (to the left in Fig. 6) with respect to the diffuser-area-D2-side edge position of the gas seal member 12 in the diffuser area D2 on the anode side.

The fuel battery cell C having the above structure also has a positional difference between a stress-occurring site S1 under the displacement of the frame 1 to the anode side (downward in Fig. 6) due to the gas pressure difference, and a stress-occurring site S2 under the displacement of the frame 1 to the cathode side due to the gas pressure difference. In addition, a beam length L3 from the gas seal member 11 to the protruding portions 10 on the cathode side is short.

Thus, as similar to the foregoing embodiment, the above fuel battery cell C can improve the durability (fatigue life) of the frame 1 and the membrane electrode assembly 2 by distributing the bending stress occurring in the frame 1, and achieves further improvement of the durability by keeping the bending stress occurring in the frame 1 low.

In a fuel battery cell C illustrated in Fig. 7, multiple gas seal members 11, 12 are provided to each of both the diffuser areas D1, D2 on the cathode side and the anode side. Then, an interval length between the gas seal members 11 in the diffuser area D1 on the cathode side (upper side in Fig. 7) is different from an interval length between the gas seal members 12 in the diffuser area D2 on the anode side. With this difference, in the fuel battery cell C, the diffuser-area-Dl, D2-side edge positions of the gas seal members 11, 12 on the cathode side and the anode side are offset from each other in the inside-outside direction of the diffuser areas (left-right direction in Fig. 7).

More specifically, in the illustrated example, there are two gas seal members 11 on the cathode side and two gas seal members 12 on the anode side, and the interval length between the gas seal members 12 on the anode side is smaller than the interval length between the gas seal members 11 on the cathode side (upper side in Fig. 7). Then, in the structure, the diffuser-area-Dl-side edge position of the gas seal members 11 in the diffuser area D1 on the cathode side is offset to the inner side of the diffuser area D1 (to the left in Fig. 7) with respect to the diffuser-area-D2-side edge position of the gas seal members 12 in the diffuser area D2 on the anode side.

The fuel battery cell C having the above structure also has a positional difference between a stress-occurring site S1 under the displacement of the frame 1 to the anode side (downward in Fig. 7) due to the gas pressure difference, and a stress-occurring site S2 under the displacement of the frame 1 to the cathode side due to the gas pressure difference. In addition, a beam length L3 from the gas seal member 11 to the protruding portions 10 on the cathode side is short.

Thus, as in the foregoing embodiment, the above fuel battery cell C can improve the durability (fatigue life) of the frame 1 and the membrane electrode assembly 2 by distributing the bending stress occurring in the frame 1, and achieves further improvement of the durability by keeping the bending stress occurring in the frame 1 low.

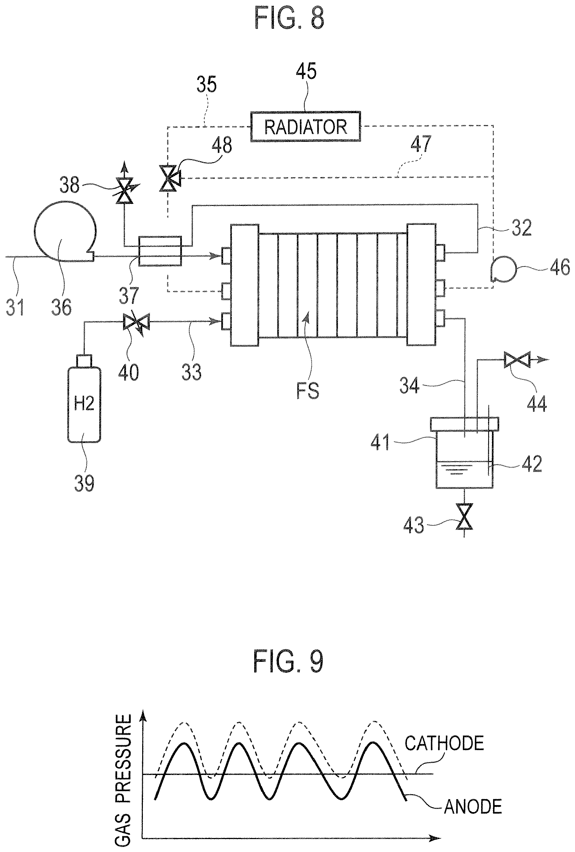

Here, Fig. 8 is a diagram illustrating an example of a fuel battery system including the fuel battery stack FS illustrated in Fig. 3, in other words, the fuel battery stack FS in which multiple fuel battery cells of the present invention are stacked on one another.

The illustrated fuel battery system includes a cathode gas supply path 31 and discharge path 32, an anode gas supply path 33 and discharge path 34, and a cooling fluid circuit 35, all of which serve for the fuel battery stack FS.

The cathode gas supply path 31 is provided with air supply means 36 such as a compressor, and a humidifier 37 to humidify the air supplied from the air supply means 36. The cathode gas discharge path 32 supplies steam included in exhaust air to the humidifier 37 and is opened to the atmosphere by a backpressure regulator valve 38 downstream of the humidifier 37.

The anode gas supply path 33 extends from a hydrogen tank 39 to the fuel battery stack FS and is provided with a hydrogen regulator valve 40 in a middle portion thereof. The anode gas discharge path 34 leads to a water separator tank 41. The water separator tank 41 includes a level sensor 41 for detecting the water volume, a drainage valve 43 for discharging water to the outside, and a nitrogen purge valve 44 for releasing the nitrogen gas to the atmosphere.

The cooling fluid circuit 35 is for circulating a cooling fluid (cooling water) cooled in the radiator 45, and includes a cooling water circulation pump 46, a bypass path 47 bypassing the radiator 45, and a three-way valve 48a connecting the circuit 35 and the bypass path 47.

The illustrated fuel battery system is called an anode dead end system, and the passage of the anode gas is unidirectional from the supply side to the discharge side. After start of power generation, this anode dead end system continues the power generation while temporarily stopping the supply of the anode gas by using the hydrogen regulator valve 40, and thereby lowers the pressure in the anode gas supply path 33. Then, when the pressure in the supply path 33 becomes a predetermined pressure, the supply of the anode gas is restarted by the hydrogen regulator valve 40. By using the gas flow generated at the start of the supply of the anode gas, water generated inside the fuel battery cell FC is discharged to the water separator tank 41.

In other words, the pressure of the anode gas in the above fuel battery system is pulsated during the operation as illustrated in Fig. 9. Meanwhile, the pressure of the cathode gas is almost constant and the upper limit pressure of the anode gas is higher than the pressure of the cathode gas.

Against these conditions, the fuel battery cell C can further enhance the durability (fatigue life) of the frame 1 and the membrane electrode assembly 2, particularly because the diffuser-area-Dl-side edge position of the gas seal member 11 on the cathode side is offset to the inner side of the diffuser area D1 from the diffuser-area-D2-side edge position of the gas seal member 12 on the anode side, as described in each of the foregoing embodiments.

Specifically, in the above fuel battery system, the upper limit pressure on the anode side is higher than the pressure on the cathode side. Accordingly, when the frame 1 is displaced in the thickness direction due to the pressure difference, the frame 1 is displaced to the cathode side (upward in Figs. 5 to 7) by a larger amount. For this reason, the diffuser-area-D 1-side edge position of the gas seal member 11 on the cathode side is offset to the inner side of the diffuser area D1, whereby the fuel battery cell C keeps much lower the bending stress under the displacement of the frame 1 to the cathode side and thus enhances the durability even more.

As described in the foregoing embodiments, the fuel battery cell C of the present invention can enhance the durability of the frame 1 and the membrane electrode assembly 2. Thus, even in a fuel battery stack FS in which multiple fuel battery cells C are stacked on one another, the fuel battery cells C achieve improved durability and are able to generate power stably for a long period of time.

### REFERENCE SIGNS LIST

- C: fuel battery cell
- D1: diffuser area on cathode side
- D2: diffuser area on anode side
- FS: fuel battery stack
- SL: gas seal
- 1: frame
- 2: membrane electrode assembly
- 3A: cathode-side separator
- 3B: anode-side separator
- 11: gas seal member on cathode side
- 12: gas seal member on anode side

## Claims

1. A fuel battery cell comprising:
a membrane electrode assembly (2) having a frame (1) made of a resin in a periphery thereof, the frame (1) being integrated with the membrane electrode assembly (2) by resin molding;
two separators (3A, 3B) holding the frame (1) and the membrane electrode assembly (2) therebetween, wherein
a diffuser area (D1, D2) allowing a reaction gas to flow therethrough is formed between the frame (1) and each of the separators (3A, 3B),
a gas seal member (11, 12) is provided to a peripheral portion of each of the diffuser areas (D1, D2), and
a diffuser-area-side edge position of the gas seal member (11) in the diffuser area (D1) on a cathode side and a diffuser-area-side edge position of the gas seal member (12) in the diffuser area (D2) on an anode side are offset from each other in an inside-outside direction of the diffuser areas, and
each diffuser-area-side edge is an innermost edge of a respective gas seal member that is closest to the membrane electrode assembly.

2. The fuel battery cell according to claim 1, wherein
a width length of the gas seal member (11) in the diffuser (D1) on the cathode side is different from a width length of the gas seal member (12) in the diffuser (D2) area on the anode side.

3. The fuel battery cell according to claim 1, wherein
the number of gas seal members (11) in the diffuser area (D1) on the cathode side is different from the number of gas seal members (12) in the diffuser area (D2) on the anode side.

4. The fuel battery cell according to claim 1, wherein
a plurality of gas seal members (11, 12) are provided to each of the diffuser areas (D1, D2) on both the cathode side and the anode side, and
an interval length between the gas seal members (11) in the diffuser area (D1) on the cathode side is different from an interval length between the gas seal members (12) in the diffuser area (D2) on the anode side.

5. The fuel battery cell according to any one of claims 1 to 4, wherein
the diffuser-area-side edge position of the gas seal member (11) in the diffuser area (D1) on the cathode side is offset to an inner side of the diffuser areas (D1, D2) with respect to the diffuser-area-side edge position of the gas seal member (12) in the diffuser area (D2) on the anode side.

6. A fuel battery stack (FS) comprising a plurality of the fuel battery cells according to any one of claims 1 to 5, the fuel battery cells (C) being stacked on one another.

## Patentansprüche

1. Brennstoffzellen-Batterie, die umfasst:
eine Membran-Elektroden-Einheit (2), die einen aus Kunststoff bestehenden Rahmen (1) an ihrem Umfang aufweist, wobei der Rahmen (1) mittels Kunststoff-Formen integral mit der Membran-Elektroden-Einheit (2) ausgebildet wird;
zwei Separatoren (3A, 3B), zwischen denen der Rahmen (1) und die Membran-Elektroden-Einheit (2) gehalten werden, wobei
ein Diffusor-Bereich (D1, D2), durch den ein Reaktions-Gas hindurchströmen kann, zwischen dem Rahmen (1) und jedem der Separatoren (3A, 3B) ausgebildet ist,
ein Gas-Dichtungselement (11, 12) an einem Umfangsabschnitt jedes der Diffusor-Bereiche (D1, D2) vorhanden ist, und
eine Randposition des Gas-Dichtungselementes (11) an der Seite des Diffusor-Bereiches in dem Diffusor-Bereich (D1) an einer Kathoden-Seite und eine Randposition des Gas-Dichtungselementes (12) an der Seite des Diffusor-Bereiches in dem Diffusor-Bereich (D2) an einer Anoden-Seite in einer Innen-Außen-Richtung der Diffusor-Bereiche zueinander versetzt sind, und
jeder Rand an der Seite des Diffusor-Bereiches ein innerster Rand eines entsprechenden Gas-Dichtungselementes ist, das sich am nächsten an der Membran-Elektroden-Einheit befindet.

2. Brennstoffzellen-Batterie nach Anspruch 1, wobei
eine Breiten-Abmessung des Gas-Dichtungselementes (11) in dem Diffusor-Bereich (D1) an der Kathoden-Seite sich von einer Breiten-Abmessung des Gas-Dichtungs-elementes (12) in dem Diffusor-Bereich (D2) an der Anoden-Seite unterscheidet.

3. Brennstoffzellen-Batterie nach Anspruch 1, wobei
die Anzahl von Gas-Dichtungselementen (11) in dem Diffusor-Bereich (D1) an der Kathoden-Seite sich von der Anzahl von Gas-Dichtungselementen (12) in dem Diffusor-Bereich (D2) an der Anoden-Seite unterscheidet.

4. Brennstoffzellen-Batterie nach Anspruch 1, wobei
eine Vielzahl von Gas-Dichtungselementen (11, 12) in jedem der Diffusor-Bereiche (D1, D2) sowohl an der Kathoden-Seite als auch an der Anoden- Seite vorhanden sind, und
eine Abmessung des Abstandes zwischen den Gas-Dichtungselementen (11) in dem Diffusor-Bereich (D1) an der Kathoden-Seite sich von einer Abmessung des Abstandes zwischen den Gas-Dichtungselementen (12) in dem Diffusor-Bereich (D2) an der Anoden-Seite unterscheidet.

5. Brennstoffzellen-Batterie nach einem der Ansprüche 1 bis 4, wobei
eine Randposition des Gas-Dichtungselementes (11) an der Seite des Diffusor-Bereiches in dem Diffusor-Bereich (D1) an der Kathoden-Seite in Bezug auf die Randposition des Gas-Dichtungselementes (12) an der Seite des Diffusor-Bereiches in dem Diffusor-Bereich (D2) an der Anoden-Seite zu einer Innenseite der Diffusor-Bereiche (D1, D2) versetzt ist.

6. Brennstoffzellen-Stapel (FS), der eine Vielzahl der Brennstoffzellen nach einem der Ansprüche 1 bis 5 umfasst, wobei die Brennstoffzellen (C) aufeinander geschichtet sind.

## Revendications

1. Cellule de pile à combustible comprenant :
un assemblage membrane-électrode (2) présentant une structure (1) faite d'une résine dans une périphérie de celle-ci, la structure (1) étant intégrée à l'assemblage membrane-électrode (2) par un moulage en résine ;
deux séparateurs (3A, 3B) maintenant la structure (1) et l'assemblage membrane-électrode (2) entre ceux-ci, dans laquelle
une zone de diffuseur (D1, D2) permettant à un gaz de réaction de s'écouler à travers celle-ci est formée entre la structure (1) et chacun des séparateurs (3A, 3B),
un élément d'étanchéité au gaz (11, 12) est installé sur une partie périphérique de chacune des zones de diffuseur (D1, D2), et
une position d'arête coté zone de diffuseur de l'élément d'étanchéité au gaz (11) dans la zone de diffuseur (D1) sur un côté de cathode et une position d'arête côté zone de diffuseur de l'élément d'étanchéité au gaz (12) dans la zone de diffuseur (D2) sur un côté d'anode sont décalées l'une par rapport à l'autre dans une direction intérieur-extérieur des zones de diffuseur, et
chaque arête côté zone de diffuseur est une arête la plus intérieure d'un élément d'étanchéité au gaz respectif qui est le plus proche de l'assemblage membrane-électrode.

2. La cellule de pile à combustible selon la revendication 1, dans laquelle
une longueur de largeur de l'élément d'étanchéité au gaz (11) dans le diffuseur (D1) sur le côté de cathode est différente d'une longueur de largeur de l'élément d'étanchéité au gaz (12) dans la zone de diffuseur (D2) sur le côté d'anode.

3. La cellule de pile à combustible selon la revendication 1, dans laquelle
le nombre d'éléments d'étanchéité au gaz (11) dans la zone de diffuseur (D1) sur le côté de cathode est différent du nombre d'éléments d'étanchéité au gaz (12) dans la zone de diffuseur (D2) sur le côté d'anode.

4. La cellule de pile à combustible selon la revendication 1, dans laquelle
une pluralité d'éléments d'étanchéité au gaz (11, 12) sont installés sur chacune des zones de diffuseur (D1, D2) sur à la fois le côté de cathode et le côté d'anode, et
une longueur d'intervalle entre les éléments d'étanchéité au gaz (11) dans la zone de diffuseur (D1) sur le côté de cathode est différente d'une longueur d'intervalle entre les éléments d'étanchéité au gaz (12) dans la zone de diffuseur (D2) sur le côté d'anode.

5. La cellule de pile à combustible selon l'une quelconque des revendications 1 à 4, dans laquelle
la position d'arête côté zone de diffuseur de l'élément d'étanchéité au gaz (11) dans la zone de diffuseur (D1) sur le côté de cathode est décalée vers un côté intérieur des zones de diffuseurs (D1, D2) par rapport à la position d'arête côté zone de diffuseur de l'élément d'étanchéité au gaz (12) dans la zone de diffuseur (D2) sur le côté d'anode.

6. Pile de pile à combustible (FS, Fuel Stack) comprenant une pluralité des cellules de pile à combustible selon l'une quelconque des revendications 1 à 5, les cellules de pile à combustible (C) étant empilées les unes sur les autres.
